Europäisches Patentamt

European Patent Office

Office européen des brevets

(11) Veröffentlichungsnummer: **0 300 974 B1**

## EUROPÄISCHE PATENTSCHRIFT

(45) Veröffentlichungstag der Patentschrift: **26.08.92**

(51) Int. Cl.5: **G01V 3/10**, G01V 13/00

(21) Anmeldenummer: **88810504.6**

(22) Anmeldetag: **22.07.88**

(54) **Induktive Sensoreinrichtung.**

(30) Priorität: **24.07.87 CH 2829/87**

(43) Veröffentlichungstag der Anmeldung:
**25.01.89 Patentblatt 89/04**

(45) Bekanntmachung des Hinweises auf die
Patenterteilung:
**26.08.92 Patentblatt 92/35**

(84) Benannte Vertragsstaaten:
**AT DE ES FR GB IT SE**

(56) Entgegenhaltungen:
**US-A- 3 609 527**
**US-A- 4 070 612**

**PATENT ABSTRACTS OF JAPAN, Band 9, Nr.
79 (P-347)[1802], 9. April 1985; & JP-A-59 210
389 (KIYOUSAN SEISAKUSHO K.K.)
29-11-1984**

(73) Patentinhaber: **Schmall, Karl-Heinz**
**Waldstrasse 20**
**W-7570 Baden-Baden 19(DE)**

(72) Erfinder: **Schmall, Karl-Heinz**
**Waldstrasse 20**
**W-7570 Baden-Baden 19(DE)**

(74) Vertreter: **Hepp, Dieter et al**
**HEPP & Partner AG Marktgasse 18**
**CH-9500 Wil(CH)**

## Beschreibung

Die Erfindung betrifft eine induktive Sensoreinrichtung mit einer, vorzugsweise jedoch wenigstens zwei Empfängerspulen und wenigstens einer an einen HF-Generator angeschlossenen Primär-Erregerspule zum Induzieren von in ungestörtem Zustand vorbestimmbaren, vorzugsweise gleichen Spannungen in den Empfängerspulen gemäss Oberbegriff von Anspruch 1, sowie ein Verfahren und eine Verwendung gemäss Oberbegriff von Anspruch 8 und 9.

Es sind induktive Sensoreinrichtungen bekannt, die eine oder mehrere Erregerspulen enthalten, welche ein elektromagnetisches Feld erzeugen, und in unmittelbarer Nähe zu den Erregerspulen Empfängerspulen, die diesem Feld ausgesetzt sind und deren Anordnung und Form so gestaltet sind, dass entweder eine Empfängerspule in der neutralen Mitte des elektromagnetischen Erregerfeldes liegt oder zwei oder mehrere Empfängerspulen vorhanden sind, die Teilspannungen erzeugen und bei denen durch Gegeneinanderschalten von Spannungen aus Empfängerspulen an den gemeinsamen Ausgängen stets dann keine Spannung auftritt, wenn das System sich im völlig abgeglichenen Zustand befindet. In diesem Zustand wird im nachgeschalteten Elektronikteil einer solchen Sensor-Empfangsschaltung, bestehend aus zwei oder mehr Empfängerspulen, kein Sensorsignal erzeugt. Solange sich weder an der Feldverteilung der Erregerspulen noch an der räumlichen Zuordnung zu den Empfängerspulen etwas verändert, bleibt der abgeglichene Zustand erhalten. ("Abgeglichen" kann dabei Null-Wert oder vorbestimmbarer Schwellwert bedeuten.) Sobald jedoch durch von aussen einwirkende metallische oder gut leitfähige Gegenstände in der Nähe des Sensorsystems das Gesamtfeld in seiner vorherigen Ausbreitung verändert wird, entsteht an den Empfängerspulen bzw. deren Kombination eine nach Betrag und/oder Phase veränderte Spannung. Diese Erscheinung ist als Sensorfunktion erwünscht und wird zur Gewinnung von lageanzeigenden oder werkstückkennzeichnenden Signalen am Ausgang der Sensorelektronik genutzt.

Störungen des Gleichgewichtes im elektromagnetischen Feld der Sensoranordnung können jedoch auch durch andere Einflüsse auftreten, zu denen Wärmeausdehnung der Sensorbauteile, mechanisches Verschieben der verschiedenen Spulenträger gegeneinander, Veränderungen der Sensorwicklungen durch Alterung und auch Einflüsse von aussen auf den Schutzschirm des Sensors infolge von Metalldampf-Ablagerungen gehören. Durch solche und andere unerwünschte Einflüsse verschiebt sich die Symmetrie des Sensorsystems, und an den Ausgängen der Spulenkombinationen treten ebenfalls Differenzspannungen auf, die von der nachgeschalteten Elektronik, die Betrag und Phase der Differenzspannungen auswertet, nicht als Fehlersignale erkannt werden und stattdessen Feldänderungen vortäuschen, die von einem Gegenstand, auf den der Sensor ansprechen soll, herrühren könnten und somit entsprechende Ausgangssignale ergeben. Diese Signale verschieben den Arbeitspunkt des Sensorsystems und bedeuten fehlerhafte Sensorfunktion.

Durch sorgfältigen Aufbau von Sensorsystemen kann man bis zu einem gewissen Grad Unabhängigkeit von Temperaturschwankungen, Alterung, mechanischen Einflüssen und äusseren Fremdfeldern erreichen. Die Empfindlichkeit der induktiven Systeme muss aber oft sehr weit getrieben werden, damit sie die aus der Praxis an diese Sensoren gestellten Anforderungen der Empfindlichkeit und Auflösung erfüllen. Dementsprechend empfindlich sind diese Sensorsysteme dann auch gegen die unerwünschten Einflüsse.

Der möglichst stabile Aufbau dieser Systeme lässt im allgemeinen eine nachträgliche mechanische Korrektur von Fehlern, die durch Alterung oder mechanische Einflüsse entstanden sind, nicht zu. Thermisch bedingte Sensorsignal-Fehler sind ohne Störung der Sensorsymmetrie nachträglich nicht zu beheben.

Patent abstracts of Japan, Band 9, Nr. 79 zeigt eine Vorrichtung zur automatischen Kompensation des Erdmagnetismus in einem vehicle sensor.

Die Publikation geht davon aus, dass in keinem Fall ein ungestörter Zustand vorliegt. Normalzustand ist die Abweichung aufgrund des Einflusses von Erdmagnetismus.

Zweck der bekannten Vorrichtung ist die Kompensation externer Störgrössen ab (Erdmagnetismus). Störgrössen aufgrund von Aenderungen des Magnetfelds durch Metallteile, Alterung der Sensorbauteile, mechanische Veränderungen der Wicklungen etc. lassen sich dabei nicht kompensieren.

Der bekannte "vehicle sensor" ist ein reiner "Anwesenheitssensor", der beim Eindringen eines metallischen Objekts (vehicle) aufgrund der Veränderung des Magnetfelds (Dämpfung mit einer Signaländerung antwortet. Eine Rückführspule wirkt dabei auf die Magnet-Kerne um das durch Erdmagnetismus erzeugte Feld in den Kernen zu kompensieren.

Mit einem solchen "vehicle sensor" lassen sich in keinem Fall die an einen komplexen induktiven Sensor gestellten Anforderungen erfüllen. Insbesondere kann die räumliche Lage des metallischen Objekts zum Sensor (Entfernung und Lage in X-, Y- und/oder Z-Achse) nicht ermittelt werden. Auch liesse sich ein Fehler eines solchen komplexen Sensor-Systems mittels einer einzelnen Rückkopplungsspule, die auf die Magnetkerne des Systems wirkt, nicht erreichen.

Die Aufgabe der vorliegenden Erfindung besteht nun darin, komplexe induktive Sensoreinrichtungen zuverlässig so abgleichen zu können, dass durch Störgrössen hervorgerufene Unsymmetrien des Felds der Sensoranordnung abgeglichen werden können.

Dabei soll die Sensoreinrichtung auch nach ihrem Zusammenbau und im Laufe des Betriebes in beliebigen Zeitabständen stets wieder genau abzugleichen und den erreichten Abgleich bis zu einem nächsten Abgleichzyklus aufrechtzuerhalten.

Die erfindungsgemässe Sensoreinrichtung löst die gestellte Aufgabe gemäss Kennzeichen von Anspruch 1, 8 und 9. Beim Auftreten eines Fehlers werden die in der oder den Empfängerspulen induzierten Teilspannungen einander gleich gemacht, d.h. Fehler werden sowohl hinsichtlich Spannung als auch hinsichtlich Phase bei positiver und negativer Abweichung kompensiert.

Selbstverständlich kann die zusätzliche Erregerspule auch mit einer sub-harmonischen oder harmonischen Frequenz der Primär-Erregerspule gespeist werden; dabei müsste lediglich die Auswertungsschaltung entsprechend an die Frequenz des kompen sierten elektromagnetischen Feldes angepasst werden.

In der erfindungsgemässen Sensoreinrichtung können auf elektronischem Wege praktisch alle vorkommenden Symmetrieabweichungen ausgeglichen werden. Hierzu wird die zusätzliche Erregerspule bzw. -spulen, die in ähnlicher Weise wie die Primär-Erregerspule(n) der Sensoreinrichtung untergebracht sein können, mit einem zusätzlichen, im Verhältnis zum Primär-Erregerstrom kleinen Strom vorzugsweise gleicher Frequenz variabler Phase und/oder variabler Amplitude beaufschlagt, wobei die Zusatzspule(n) entweder symmetrisch zur Primär-Erregerspule und/oder zu den Empfänger-Teilspulen oder unsymmetrisch zu ihnen liegen kann.

Der in der Zusatzspule fliessende Wechselstrom erzeugt ebenfalls ein elektromagnetisches Feld entweder gleicher Phasenlage oder veränderter Phase gegen das Primär-Erregerfeld. Die Summe der Teilfelder ist das auf die Empfängerspulen einwirkende Gesamtfeld. Ist dieses vorher nicht symmetrisch, so kann durch entsprechende Beaufschlagung der Zusatzspule mit Wechselstrom veränderbarer Amplitude und/oder Phase in geeigneter Weise die Symmetrie wieder hergestellt werden.

Selbstverständlich lässt sich erfindungsgemäss auch eine etwa wünschbare Unsymmetrie im Erreger- bzw. Empfänger-Feld erzeugen - z.B. bei gekrümmtem Werkstückverlauf; der Verstärker und die Auswertungsanordnung könnten dann so ausgelegt werden, dass ein Sensorsignal oberhalb bzw. unterhalb eines vorbestimmbaren Schwellwerts statt darüber/unter dem Nullwert ausgewertet wird.

Dabei spielt es keine Rolle, ob die Zusatzspule eine zylindrische, rechteckige oder flache Form hat. Sie kann auch aus mehreren Teilspulen zusammengesetzt sein, so dass alle entsprechenden Sensorformen grundsätzlich in der gleichen Weise und Funktion mit solchen Zusatzspulen versehen werden können.

In einer vorteilhaften Ausgestaltung der erfindungsgemässen Sensoreinrichtung kann der Abgleich in beliebig wählbaren Zeitabständen automatisch herbeigeführt werden die mit einem dem Unterschied zwischen den in den Teil-Empfängerspulen induzierten Spannungen entsprechenden Steuersignal beaufschlagbar ist. Der Regler enthält Mittel, um den Wert des Unterschiedes einem nichtvolatilen Programmspeicher zuzuführen, und Mittel, um danach den im Speicher enthaltenen Wert als Stellgrösse den Mitteln zum Speisen der zusätzlichen Erregerspule zuzuführen.

Ausführungsbeispiele der erfindungsgemässen Sensoreinrichtung werden nachstehend anhand der Zeichnungen näher erläutert. In diesen zeigen:

Figur 1    schematisch eine Ausführungsform der erfindungsgemässen Einrichtung,

Figur 2    einen Flachsensor, beispielsweise mit auf Ringscheiben angeordneten Sensorspulen im Schnitt,

Figur 3    eine Draufsicht zu Figur 2,

Figur 4    schematisch eine Variante der Mittel zum Speisen einer zweiteiligen Zusatz-Erregerspule,

Figur 5    ein Schema einer Einrichtung mit Mitteln zum Speisen einer einteiligen Zusatz-Erregerspule,

Figur 6    ein Spannungsdiagramm zu Figur 5,

Figur 7    schematisch eine erfindungsgemässe Sensoreinrichtung mit automatischem Abgleich,

Figur 8    ein Ausführungsbeispiel mit nur einer Empfängerspule,

Figur 9    ein Ausführungsbeispiel mit zwei zusätzlichen Erregerspulen

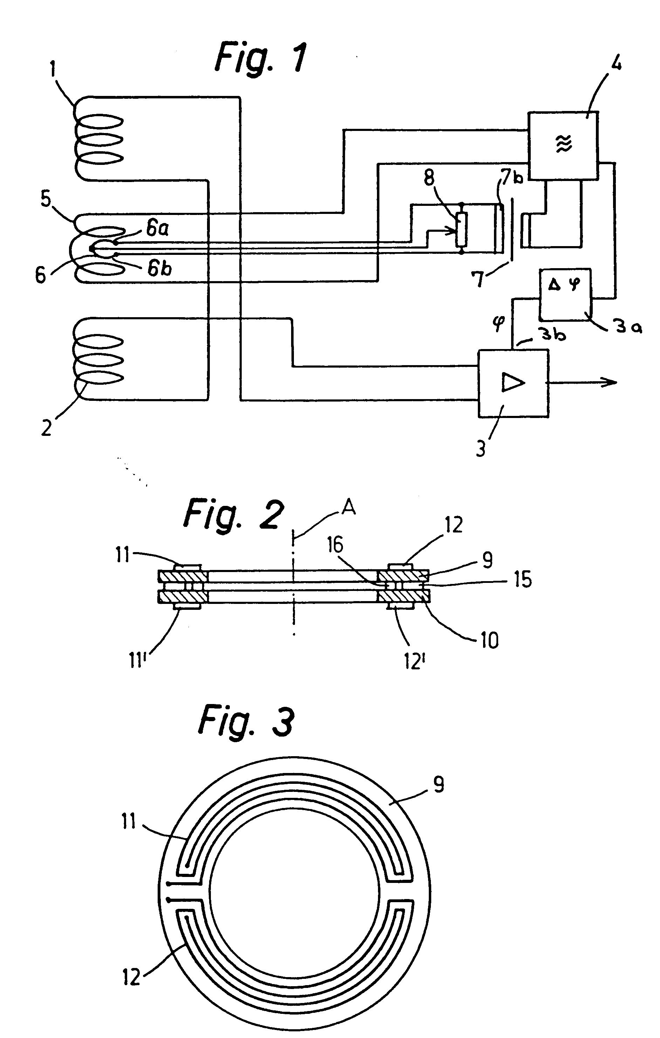

Die Figur 1 zeigt das Prinzip einer von mehreren möglichen Mehrspulen-Sensoreinrichtung in einfachster Ausführungsform. Die Einrichtung besitzt hier zwei gleiche Empfängerspulen 1 und 2, die gegeneinander geschaltet sind und zusammen an einem Verstärker 3 anliegen. Ein HF-Generator 4 für die Erregung sendet einen Strom durch eine Primär-Erregerspule 5, die zwischen den beiden Empfängerspulen 1 und 2 angeordnet ist.

Ausserdem führt eine Verbindung vom Generator 4 zu einem schematisch dargestellten Phasenvergleicher 3a, der mit dem Verstärker 3 verbunden ist. Dies dient zum Phasenvergleich der am Verstärkereingang 3b bei Störung der Symmetrie anstehenden Empfängerspulen-Differenzspannung. Der Phasenvergleich ermöglicht die Richtungserkennung einer Sensorabweichung.

Solange die Spulen 1, 2 und 5 genau aufeinander abgeglichen sind, tritt in Abwesenheit von elektrisch leitenden oder ferromagnetischen Körpern in ihrer Nähe an den beiden Empfängerspulen 1 und 2 keine Summenspannung auf, weil sich die in den beiden Spulen induzierten Spannungen gleicher Amplitude und entgegengerichteter Polarität gegenseitig aufheben.

Durch Temperatureinflüsse, mechanische Beanspruchung, Alterung usw. kann jedoch die Symmetrie gestört werden, so dass die Summenspannung über den beiden Empfängerspulen 1 und 2 nicht mehr null ist. In einem solchen Fall wird erfindungsgemäss zur Korrektur eine zusätzliche Erregerspule 6 verwendet. Im Ausführungsbeispiel gemäss Figur 1 besteht die Spule 6 aus einer einzelnen Windung mit einem Mittelabgriff. Die Spule 6 ist an die Sekundärseite 7b eines an den HF-Generator 4 angeschlossenen Trennübertrgfers 7 gelegt, und der Mittelabgriff der Spule ist mit dem Abgriff eines ebenfalls an die Sekundärseite 7 gelegten Potentiometers 8 verbunden. Wenn sich der Abgriff des Potentiometers 8 in seiner Mittelstellung befindet, dann fliesst in den beiden Halbwindungen der Spule 6 der gleiche Strom, und das Feld bleibt bei genau symmetrischer Anordnung der Spule 6 im Sensorsystem unverändert. Sobald jedoch der Abgriff des Potentiometers 8 nach oben verschoben wird, ist die Stromsymmetrie in den beiden Windungshälften nicht mehr vorhanden, weil über den Abgriff ein Strom zu fliessen beginnt, wodurch der Gesamtstrom in der einen Windungshälfte grösser und in der anderen kleiner wird. Die eine Hälfte des Feldes wird also verstärkt und die andere abgeschwächt. Umgekehrt verhält es sich beim Verschieben des otentiometerabgriffs nach unten.

In den Figuren 2 und 3 wird ein Aufbau als Beispiel eines kombinierten Flachsensors gezeigt, der zwei ringförmige Trägerscheiben 9 und 10 mit je zwei symmetrisch zur Sensorachse A angeordneten flachen Empfängerspulen 11 und 12 bzw. 11' und 12' aufweist. Die Spulen 11' und 12' sind gegen die Spulen 11 und 12 um 90° in der Ebene verdreht, um dem Sensor ein 4-Quadranten-Verhalten zu geben, d.h., Ausgangssignale zu ermöglichen, die über die Lage eines metallischen Körpers innerhalb des Ringes in allen vier Quadranten Aussagen machen. Die Primär-Erregerspule 15 befindet sich beispielsweise zwischen den beiden Ringscheiben 9 und 10. Solche Flachsensoren sind ebenfalls bekannt und beispielsweise in der EP-A-O 130 940 beschrieben. Gemäss der Erfindung ist koaxial zur Primär-Erregerspule 15 eine zusätzliche Erregerspule 16 angeordnet, die gleich wie die Spule 6 in Figur 1 ausgebildet sein und gespeist werden kann, um Ausrichtungsfehler der Spulen 11, 12, 11', 12' und 15 zu korrigieren.

Natürlich könnten die Sensorspulen auch anders als in Figur 2 dargestellt auf Trägerscheiben verteilt sein. Beispielsweise kann eine der Scheiben ein oder zwei Paare von Empfängerspulen, wie die Spulen 11 und 12 und 11' und 12', tragen während eine andere Scheibe die Primär-Erregerspule 15 trägt. Die zusätzliche Erregerspule 16 könnte dann auf einer gesonderten Trägerscheibe, auf der Trägerscheibe der Empfängerspulen oder auf der Trägerscheibe der Primär-Erregerspule getragen sein. Multilayertechnik und Mehrfachdruck auf Substraten bieten hier für die Praxis vielfältige Realisierungsmöglichkeiten.

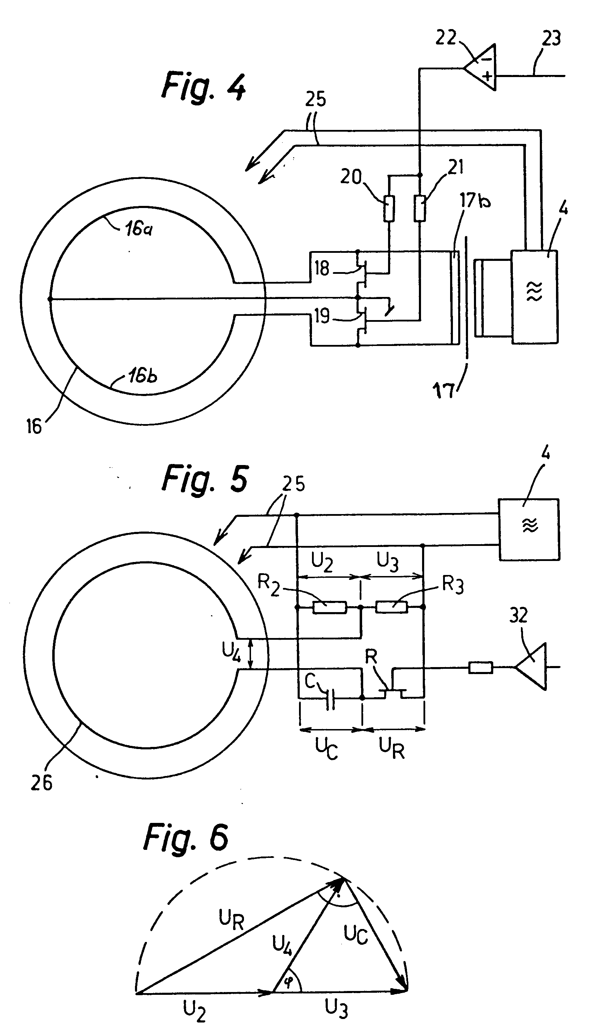

In Figur 4 ist eine andere Möglichkeit der Speisung einer geteilten zusätzlichen Erregerspule, wie der auf einer Trägerscheibe getragenen Spule 16 von Figur 2, schematisch dargestellt. Gemäss Figur 4 ist die Spule 16 wieder an die Sekundärseite 17b eines an den HF-Generator 4 angeschlossenen Trennübertragers 17 gelegt. Der Mittelabgriff der Spule 16 ist mit dem Abgriff eines Spannungsteilers verbunden, der ebenfalls an die Sekundärseite 17b gelegt ist und aus zwei elektronisch steuerbaren Widerständen 18 und 19, beispielsweise Feldeffekt-Transistoren, besteht. Ueber Vorwiderstände 20 und 21 wird aus einem Verstärker 22 eine steuernde Spannung zugeführt, die vom Eingangssignal des Verstärkers 22 bestimmt wird. Die nicht näher beschiebenen steuerbaren Widerstände 18 und 19 können so angesteuert werden, dass im Falle Spannung null am Eingang 23 des Verstärkers 22 beide Widerstände gleich sind, bei negativer Spannung am Eingang 23 sich der eine Widerstand vergrössert, der andere verkleinert, und bei positiver Spannung umgekehrt. So können durch Zuführung von Analogsignalen aus einer Steuereinrichtung die Teilströme in der Korrekturspule 16 in der gewünschten Weise gesteuert werden. Die Primär-Erregerspule, in Figur 4 nicht dargestellt, wird vom HF-Generator 4 über Leitungen 25 gespeist. In der Einrichtung gemäss Figur 4 wird zur Korrektur die Amplitude der beiden Teilströme in der Korrekturspule verändert. Die Figur 5 illustriert ein anderes Beispiel, in welchem die Korrekturmittel einen Phasenfehler im Sensorsystem durch ein phasenveränderliches Korrekturfeld auszugleichen gestatten.

Gemäss Figur 5 ist eine zusätzliche Erregerspule bzw. Korrekturspule 26 ohne Mittelabgriff vorgesehen, die an eine Phasenschieberschaltung bekannter Art angeschlossen ist und von dieser mit einer HF-Spannung versorgt wird, deren Phasenlage veränderbar ist. Die Phasenschieberschaltung besteht beim Ausführungsbeispiel aus einem Widerstand R und einer Kapazität C sowie zwei Widerständen $R_2$ und $R_3$. Der Widerstand R ist als elektronisch steuerbarer Widerstand ausgebildet, der, ähnlich wie in Figur 4 die Widerstände 18 und 19, mit einem Verstärker 32 verbunden ist. Die Teilspannungen an den Gliedern der Phasenbrücke sind mit $U_R$, $U_C$, $U_2$ und $U_3$ bezeichnet.

An der Phasenbrücke liegt die vom HF-Generator 4 gelieferte Spannung. Die Spule 26 liegt in der Brückendiagonale mit der Spannung U4. Die Figur 6 zeigt das Vektordiagramm der verschiedenen Spannungen. Daraus ist ersichtlich, dass die Amplitude der Spannung U4 an der Spule 26 bei allen Widerstandswerten des steuerbaren Widerstandes R gleich bleibt und dass die Phase des Stromes in der Spule 26 in weiten Grenzen durch Steuern des Widerstandes R allein variierbar ist. Das von der Spule 26 erzeugte Feld, das dem in einer Sensoreinrichtung von der Primär-Erregerspule erzeugten Feld überlagert wird, kann also die Phase des Gesamtfeldes verändern.

Dabei wird die Anordnung z.B. durch Kombination der Ausführungsbeispiele gemäss Figur 4 und 5 oder 1 und 5 derart gestaltet, dass sowohl Phase als auch Spannung (betragsmässig) durch wenigstens eine zusätzliche Erregerspule kompensiert werden.

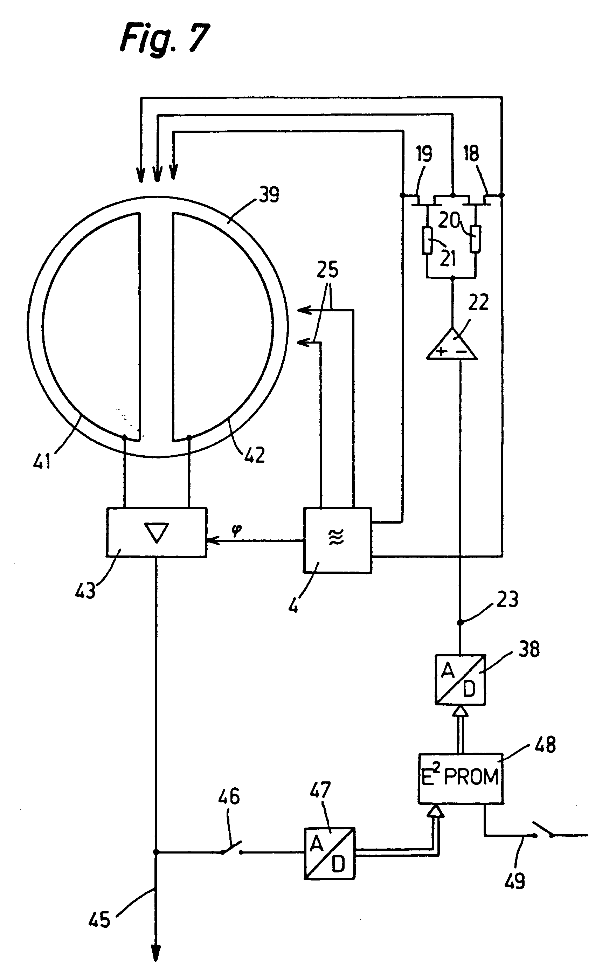

In der Praxis wird man die Korrektur des Erregerfeldes in einer sich nicht im Zustand der Symmetrie befindenden Sensoreinrichtung in bestimmten Zeitabständen durchführen oder - in einer sich selbsttätig abgleichenden Einrichtung - veranlassen. Eine selbsttätig abgleichende erfindungsgemässe Sensoreinrichtung ist in Figur 7 schematisch dargestellt.

In Figur 7 sind die Mittel zum Speisen der zusätzlichen Erregerspule im wesentlichen gleich ausgebildet wie in Figur 4, mit steuerbaren Widerständen 18 und 19, Vorwiderständen 20 und 21 und Verstärker 22. Der Eingang 23 des Verstärkers 22 liegt hier an einem Digital/Analogwandler 38. Die auf einer Trägerscheibe 39 angeordneten, schematisch dargestellten Empfängerspulen 41 und 42 des Sensorsystems liegen am Eingang eines Verstärkers und Phasenvergleichers 43. Dieser erhält aus dem HF-Generator 4 ein phasengerechtes Signal. Der HF-Generator 4 speist auch den Spannungsteiler 18, 19 und, über die Leitungen 25, die Primär-Erregerspule (nicht dargestellt).

Der Ausgang des Verstärkers 43 führt über eine Leitung 45 zu einer Steuereinrichtung, die von der Sensoreinrichtung geführt werden soll.

Eine schematisch als Schalter dargestellte, zeitweise einschaltbare Verbindung 46 führt von der Leitung 45 zu einen Analog-Digital-Umsetzer 47, der an seinem Ausgang ein der Richtung (Polarität) und Spannungshöhe des Ausgangssignals des Verstärkers 43 entsprechendes digitales Signal in paralleler Form bereitstellt, welches zu einem nichtvolatilen Speicher 48 gelangt. Sobald der Wert aus dem Wandler 47 feststeht, wird er durch ein auf einer Leitung 49 zugeführtes Aktivierungssignal in den Speicher 48 eingelesen und dort nichtflüchtig abgespeichert. Der Ausgang des Speichers 48 führt zum Digital/Analogwandler 38. Dort wird der im Speicher enthaltene Wert in ein Steuersignal für die Korrekturspulenströme umgewandelt.

Der Ablauf einer automatischen Korrektur findet in der in Figur 7 als Beispiel gezeigten Einrichtung wie folgt statt.

Das Sensorsystem wird in eine neutrale Lage gebracht, in der es von keinen äusseren elektrisch leitenden Teilen beeinflusst wird.

Dann wird der Schalter 46 geschlossen, und anschliessend wird auf der Leitung 49 das Aktivierungssignal zugeführt. Am Ausgang des Wandlers 38 steht dann ein Fehlersignal an, welches invertiert den Widerständen 18 und 19 zur Korrekturstrom-Steuerung zugeführt wird.

Dadurch ändert sich das Ausgangssignal des Verstärkers 43 auf der Leitung 45. Im Idealfall ist dieses Ausgangssignal jetzt bereits voll korrigiert, d.h. zu null geworden. Falls ein Fehlersignal noch besteht, wird dieses durch erneute Betätigung des Schalters 46 wieder in den Speicher 48 übernommen und zum bisherigen Wert addiert, und die Summe wird an den Wandler 38 ausgegeben. So kann durch wiederholtes Korrigieren der Fehler des Sensorsystems voll ausgeglichen werden. Danach wird die automatische Korrektur abgeschaltet und erst wieder zu einem späteren Zeitpunkt, der vom Programm vorgegeben sein kann, zur erneuten Ueberprüfung des Sensors auf Symmetrie aktiviert.

In Figur 7 sind der Einfachheit halber die für das Einspeichern und Addieren noch erforderlichen Glieder der Hardware nicht gezeigt. Für den Fachmann bedeutet es aber kein Problem, die beschriebenen Abläufe zu realisieren. Es ist ausser der beschriebenen digitalen Abgleicheinrichtung und Messwertspeicherung auch möglich, mit den Mitteln der Analog-Schalterungstechnik Messwerte und Korrekturwerte abzuleiten und zu speichern. Das erfindungsgemässe Verfahren wird dadurch nicht beeinflusst.

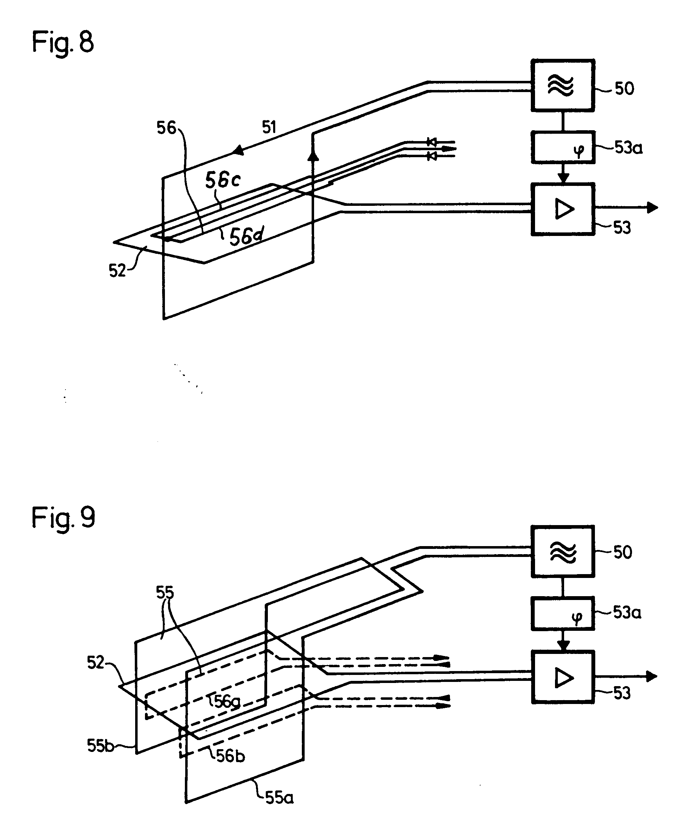

Als weiteres Beispiel einer erfindungsgemässen Einrichtung ist in Figur 8 ein Mehrspulen-Sensor gezeigt, der aus einer Erregerspule 51 und einer Empfängerspule 52 besteht und der in einem besonderen Anwendungsfall, welcher eine Krümmung der Spule verlangt, entsprechend ausgeführt und mit der erfindungsgemässen elektronischen Abgleichmöglichkeit zusätzlich versehen ist.

Figur 8 zeigt einen HF-Generator 50 als Erreger-Oszillator, der an die Erregerspule 51 einen Wechselstrom abgibt. 52 stellt die Empfängerspule dar. Sie ist in der Anordnung ähnlich eines Goniometers so ausgerichtet, dass die Teilfelder der Erregerspule 52 in beiden Spulenhälften selbst sich gegenseitig aufheben und nicht, wie in den vorausgegangenen Beispielen, die durch ein Feld erzeugten Teilspannungen von zwei Spulen.

Die Empfängerspule 52 ist wiederum mit einem Empfangs-Verstärker 53 mit dem Phasenvergleicher 53 a gerüstet, an dessen Ausgang ein von der Feldveränderung abhängiges Ausgangssignal auftritt, wenn das Feld in der Empfängerspule 52 unsymmetrisch verändert wird.

Mit 56 ist die aus zwei symmetrisch zur Erregerspule 51 angeordnete, als zusätzliche Erregerspule ausgebildete Nachstimmspule bezeichnet, deren Hälften, wie in den vorausgehenden Beispielen bereits beschrieben, mit unterschiedlichen Strömen beschickt werden können, um auftretende Unsymmetrien des Primär-Erregerfeldes und/oder des auf die Empfängerspule 52 wirkenden Feldes auszugleichen. Die Nachstimmung kann dabei manuell oder automatisch erfolgen; sie kann Unsymmetrien in Phase und/oder Amplitude ausgleichen.

Figur 9 stellt eine andere Mehrspulen-Sensoreinrichtung dar, welche an Stelle der in Figur 8 mit 51 bezeichneten Erreger-Spulenanordnung eine Doppelspule im Erregerkreis aufweist. Diese Erregerspule ist mit 55 bezeichnet. Sie besteht aus zwei gegeneinander geschalteten Teilspulen 55a, 55b die jeweils um 180° entgegengesetzte Felder erzeugen, so dass die Empfängerspule 52 wiederum bei genauem Abgleich bzw. genauem Ausrichten keine Spannung abgibt.

Die Nachstimmspule 56 ist bei diesem Beispiel in zwei Spulen-Hälften 56a und 56b aufgeteilt, die den beiden Erregerspulen 55a, 55b zugeordnet sind. Beide Hälften 56a, 56b können, wie bei den vorausgegangenen Beispielen beschrieben, wiederum mit unterschiedlichen Erregerströmen gleicher Frequenz oder mit unterschiedlichen Phasenlagen ihrer Ströme gegenüber dem Haupterregerstrom betrieben werden, um die erfindungsgemässe Wirkung herbeizuführen. HF-Generator 50, Verstärker 53 und Phasenvergleicher 53a sind wie in Figur 8 angeordnet.

Für die in den Figuren 8 und 9 gezeigten Ausführungsbeispiele werden die gleichen Nachregelschaltungen, wie vorgehend beschrieben, eingesetzt, so dass sich eine Wiederholung der Darstellung erübrigt.

**Patentansprüche**

1. Induktive Sensoreinrichtung mit wenigstens einer, vorzugsweise jedoch zwei Empfängerspulen (1, 2, 11, 12, 41, 42, 52) und wenigstens einer an einen HF-Generator (4, 50) angeschlossenen Primär-Erregerspule (5, 15, 51, 55a, 55b) zum Induzieren von in ungestörtem Zustand vorbestimmbaren Spannungswerten in der oder in den Empfängerspulen, mit wenigstens einer zusätzlichen Korrekturspulen-Anordnung, die durch einen Hochfrequenzstrom gespeist wird, dadurch gekennzeichnet, dass die Korrekturspulen-Anordnung jeweils zwei Spulen (6a, 6b; 16a, 16b; 56a, 56b; 56c, 56d) oder zwei Teilspulen wenigstens einer Korrekturspule (6, 16, 56) aufweist, die durch einen Abgriff unterteilt ist, und dass zum Abgleich der in die Empfängerspule bzw. die beiden Empfängerspulen induzierten Spannungen durch ein aus der Summe von Teilfeldern der Korrekturspulen bzw. der Teilspulen bestehendes Gesamtfeld, Speise-Mittel (8, 18, 19, C, R, $R_2$, $R_3$) vorgesehen sind, durch welche die Spulen bzw. die Teilspulen mit Hochfrequenzströmen veränderbarer Phase und/oder veränderbarer Amplitude beaufschlagt werden, und durch welche die Amplituden und/oder die Phasen der jeweils durch die Korrekturspulen bzw. die Teilspulen fliessenden Ströme gleich oder unterschiedlich einstellbar sind.

2. Einrichtung nach Anspruch 1, dadurch gekennzeichnet, dass die Speise-Mittel einen Spannungsteiler (8, 18, 19) aufweisen, dass die Korrekturspule (6, 16) parallel mit dem Spannungsteiler (8, 18, 19) an eine Korrekturspannungsquelle (7, 17) gelegt ist und dass der Abgriff der Korrekturspule mit dem Abgriff des Spannungsteilers verbunden ist.

3. Einrichtung nach Anspruch 2, dadurch gekennzeichnet, dass der Spannungsteiler ein manuell einstellbares Potentiometer (8) ist.

4. Einrichtung nach Anspruch 2, dadurch gekennzeichnet, dass die Speise-Mittel einen Spannungsteiler enthalten, der von zwei elektronisch steuerbaren Impedanzen (18, 19) gebildet ist.

5. Einrichtung nach Anspruch 1 oder 4, gekennzeichnet durch einen mit dem Unterschied zwischen den in den beiden Empfängerspulen (41, 42) induzierten Spannungen beaufschlagbaren Regler (47, 48, 49, 38, 22) zum automatischen Einstellen der Speise-Mittel (18, 19).

6. Einrichtung nach Anspruch 5, dadurch gekennzeichnet, dass der Regler (47, 48, 49, 38, 22) Mittel (46, 47) enthält, um den Wert des genannten Unterschiedes in Zeitabständen einem nichtvolatilen Programmspeicher (48) zuzuführen, und Mittel (38, 22), um danach den im Speicher (48) enthaltenen Wert als Stellgrösse den Speisemitteln (18, 19) zuzuführen.

7. Einrichtung nach einem der vorangegangenen Ansprüche, dadurch gekennzeichnet, dass die Korrektur-Spulen (6a, 6b; 16a, 16b; 56a, 56b; 56c, 56d) symmetrisch zur Primär-Erregerspule (5, 15, 51, 55a, 55b) und/oder zu den Empfängerspulen (1, 2, 11, 12, 41, 42, 52) angeordnet sind.

8. Verfahren zum Abgleich bzw. zur Fehlerkompensation einer induktiven HF-Sensoreinrichtung mit wenigstens einer Empfängerspule und wenigstens einer an einen HF-Generator angeschlossenen Primär-Erregerspule zum Induzieren von in ungestörtem Zustand vorbestimbaren Spannungswerten in die Empfängerspulen, und einer Korrekturspulen-Anordnung, die im Feld der Primär-Erregerspule angeordnet ist, dadurch gekennzeichnet, dass in wenigstens zwei Spulen (6a, 6b; 16a,16b; 56a, 56b; 56c, 56d) oder zwei Teilspulen wenigstens einer Korrekturspule (6, 16, 56) durch SpeiseMittel (8, 18, 19, C, R, R$_2$, R$_3$) jeweils ein Hochfrequenzstrom eingespeist wird, wobei die Amplitude und/oder die Phase der jeweiligen Hochfrequenzströme durch die Spulen bzw. Teilspulen zum Abgleich unterschiedlich verändert wird.

9. Verwendung von wenigstens zwei zusätzlichen Spulen (6a, 6b; 16a, 16b; 56a, 56b; 56c, 56d) oder zwei Teilspulen wenigstens einer Korrekturspule (6, 16, 56) zum Erzeugen eines aus der Summe von in Phase und/oder Amplitude unterschiedlichen Teilfeldern bestehenden Kompensationsfelds in der Empfängerspule (1, 2, 11, 12, 41, 42, 52) einer induktiven Sensoreinrichtung, in welche Empfängerspule durch wenigstens eine an einen HF-Generator (4, 50) angeschlossene Primär-Erregerspule (5, 15, 51, 55a, 55b) in ungestörtem Zustand vorbestimmbare Spannungswerte induziert werden, wobei durch das Kompensationsfeld Spannungsänderungen und/oder Phasenverschiebungen in der Empfängerspule gegenüber dem vorbestimmbaren Wert kompensiert werden.

**Claims**

1. An inductive sensor apparatus comprising at least one but preferably two receiver coils (1, 2, 11, 12, 41, 42, 52) and at least one primary exciter coil (5, 15, 51, 55a, 55b) connected to an HF-generator (4, 50) for inducing voltage values which can be predetermined in an undisturbed condition in the receiver coil or coils, and at least one additional correction coil arrangement which is fed by a high-frequency current characterised in that the correction coil arrangement respectively comprises two coils (6a, 6b; 16a, 16b; 56a, 56b; 56c, 56d) or two coil portions of at least one correction coil (6, 16, 56) which is subdivided by a tapping, and that for compensation of the voltages induced in the receiver coil or the two receiver coils, by a total field comprising the sum of the field portions of the correction coils or the coil portions, there are provided feed bans (8, 18, 19, C, R, R$_2$, R$_3$) by which the coils or the coil portions are supplied with high-frequency currents of variable phase and/or variable amplitude and by which the amplitudes and/or the phases of the respective currents flowing through the correction coils or the coil portions can be set to be the same or different.

2. Apparatus according to claim 1 characterised in that the feed means have a voltage divider (8, 18, 19), that the correction coil (6, 16) is connected in parallel with the voltage divider (8, 18, 19) to a correction voltage source (7, 17) and that the tapping of the correction coil is connected to the tapping of the voltage divider.

3. Apparatus according to claim 2 characterised in that the voltage divider is a manually settable potentiometer (8).

4. Apparatus according to claim 2 characterised in that the feed means include a voltage divider which is formed by two electronically controllable impedances (18, 19).

5. Apparatus according to claim 1 or claim 4 characterised by a regulator (47, 48, 49, 38, 22) for automatically setting the feed means (18, 19), which regulator can be acted upon by the difference between the voltages induced in the two receiver coils (41, 42).

6. Apparatus according to claim 5 characterised in that the regulator (47, 48, 49, 38, 22) includes means (46, 47) for passing the value of said difference at intervals of time to a nonvolatile program memory (48), and means (38, 22) for thereafter feeding the value contained in the memory as a control parameter to the feed bans (18, 19).

7. Apparatus according to one of the preceding claims characterised in that the correction coils (6a, 6b; 16a, 16b; 56a, 56b; 56c, 56d) are arranged symmetrically relative to the primary exciter coil (5, 15, 51, 55a, 55b) and/or the receiver coils (1, 2, 11, 12, 41, 42, 52).

8. A process for compensation or for error compensation of an inductive HF-sensor apparatus comprising at least one receiver coil and at least one primary exciter coil connected to an HF-generator for inducing voltage values which can be predetermined in an undisturbed condition in the receiver coils, and a correction coil arrangement which is arranged in the field of the primary exciter coil, characterised in that a respective high-frequency current is fed into at least two coils (6a, 6b; 16a, 16b; 56a, 56b; 56c, 56d) or two coil portions of at least one correction coil (6, 16, 56) by feed means (8, 18, 19, C, R, $R_2$, $R_3$), wherein the amplitude and/or the phase of the respective high-frequency currents is varied differently by the coils or coil portions for compensation purposes.

9. Use of at least two additional coils (6a, 6b; 16a, 16b; 56a, 56b; 56c, 56d) or two coil portions of at least one correction coil (6, 16, 56) for producing a compensation field comprising the sum of field portions which differ in phase and/or amplitude, in the receiver coil (1, 2, 11, 12, 41, 42, 52) of an inductive sensor apparatus, in which receiver coil voltage values which can be predetermined in an undisturbed condition are induced by at least one primary exciter coil (5, 15, 51, 55a, 55b) connected to an HF-generator (4, 50), wherein changes in voltage and/or phase shifts in the receiver coil relative to the predeterminable value are compensated by the compensation field.

**Revendications**

1. Dispositif de capteur inductif comportant au moins une, mais de préférence deux bobines de réception (1, 2, 11, 12, 41, 42, 52) et une ou plusieurs bobines d'excitation primaires (5, 15, 51, 55a, 55b), reliées à un générateur HF (4, 50) et destinées à induire dans la ou les bobines de réception des valeurs de tension aptes à être prédéfinies à l'état non perturbé, et comportant un ou plusieurs dispositifs de bobines de correction supplémentaires alimentées par un courant de haute fréquence, caractérisé en ce que le dispositif de bobines de correction possède à chaque fois deux bobines (6a, 6b ; 16a, 16b ; 56a, 56b ; 56c, 56d) ou deux sections d'une ou plusieurs bobines de correction (6, 16, 56) qui sont divisées par une prise, et en ce qu'il est prévu, pour l'équilibrage des tensions induites dans la ou les deux bobines de réception, grâce à un champ total composé de la somme de champs partiels des bobines de correction ou des sections de bobines, des moyens d'alimentation (8, 18, 19, C, R, $R_2$, $R_3$) grâce auxquels les bobines ou sections de bobines sont sollicitées par des courants de haute fréquence de phase variable et/ou d'amplitude variable, et grâce auxquels les amplitudes et/ou les phases des courants circulant respectivement à travers les bobines de correction ou sections de bobines sont aptes à être réglées pour être identiques ou différentes.

2. Dispositif selon la revendication 1, caractérisé en ce que les moyens d'alimentation possèdent un diviseur de tension (8, 18, 19), en ce que la bobine de correction (6, 16) est placée au niveau d'une source de tension de correction (7, 17), parallèlement au diviseur de tension (8, 18, 19), et en ce que la prise de la bobine de correction est reliée à la prise du diviseur de tension.

3. Dispositif selon la revendication 2, caractérisé en ce que le diviseur de tension est un potentiomètre (8) réglable manuellement.

4. Dispositif selon la revendication 2, caractérisé en ce que les moyens d'alimentation contiennent un diviseur de tension qui est formé par deux impédances (18, 19) à commande électronique.

5. Dispositif selon la revendication 1 ou 4, caractérisé par un régulateur (47, 48, 49, 38, 22) apte à être sollicité par la différence entre les tensions induites dans les deux bobines de réception (41, 42), et destiné au réglage automatique des moyens d'alimentation (18, 19).

6. Dispositif selon la revendication 5, caractérisé en ce que le régulateur (47, 48, 49, 38, 22) contient des moyens (46, 47) pour transmettre périodiquement la valeur de ladite différence à une mémoire de programmes non volatile (48), et des moyens (38, 22) pour transmettre ensuite la valeur contenue dans la mémoire (48), comme grandeur de réglage, aux moyens d'alimentation (18, 19).

7. Dispositif selon l'une des revendications précédentes, caractérisé en ce que les bobines de correction (6a, 6b ; 16a, 16b ; 56a, 56b ; 56c, 56d) sont disposées symétriquement par rapport à la bobine d'excitation primaire (5, 15, 51, 55a, 55b) et/ou aux bobines de réception (1, 2, 11, 12, 41, 42, 52).

8.  Procédé pour l'équilibrage ou la compensation d'erreurs d'un dispositif de capteur HF inductif à l'aide d'une ou plusieurs bobines de réception et d'une ou plusieurs bobines d'excitation primaires reliées à un générateur HF et destinées à induire dans les bobines de réception des valeurs de tension aptes à être prédéfinies à l'état non perturbé, et à l'aide d'un dispositif de bobines de correction qui est disposé dans le champ de la bobine d'excitation primaire, caractérisé en ce qu'un courant de haute fréquence vient alimenter au moins deux bobines (6a, 6b ; 16a, 16b ; 56a, 56b; 56c, 56d) ou deux sections d'une ou plusieurs bobines de correction (6, 16, 56) grâce à des moyens d'alimentation (8, 18, 19, C, R, $R_2$, $R_3$), l'amplitude et/ou la phase des courants de haute fréquence respectifs étant modifiées différemment par les bobines ou sections de bobines en vue de l'équilibrage.

9.  Utilisation d'au moins deux bobines supplémentaires (6a, 6b ; 16a, 16b ; 56a, 56b ; 56c, 56d) ou de deux sections d'une ou plusieurs bobines de correction (6, 16, 56) pour produire un champ de compensation, composé de la somme de champs partiels de différentes phases et/ou amplitudes, dans la bobine de réception (1, 2, 11, 12, 41, 42, 52) d'un dispositif de capteur inductif dans laquelle des valeurs de tension aptes à être prédéfinies à l'état non perturbé sont induites par une ou plusieurs bobines d'excitation primaires (5, 15, 51, 55a, 55b) reliées à un générateur HF (4, 50), des variations de tension et/ou des déphasages étant compensés dans la bobine de réception, par rapport à la valeur apte à être prédéfinie, par le champ de compensation.

Fig. 1

Fig. 2

Fig. 3

**Fig. 4**

**Fig. 5**

**Fig. 6**

**Fig. 7**

Fig. 8

Fig. 9